# EUROPÄISCHE PATENTANMELDUNG

(11) **EP 3 207 792 A1**
(43) Veröffentlichungstag der Anmeldung: **23.08.2017**
(21) Anmeldenummer: 17154347.3
(22) Anmeldetag: 02.02.2017
(51) Int. Cl.: A01J 15/12, A01J 15/16

(54) **VORRICHTUNG ZUM HERSTELLEN VON BUTTER**

(30) Priorität: 19.02.2016 DE 202016100892 U
(71) Anmelder: GEA Mechanical Equipment GmbH, 59302 Oelde (DE)
(72) Erfinder: Klapper, Siegfried, 33442 Herzebrock-Clarholz (DE); Moss, Reinhard, 59320 Ennigerloh (DE)
(74) Vertreter: Specht, Peter

(57) **Zusammenfassung**

Eine Vorrichtung zum Herstellen von Butter die einen Einlauf (1), einen Butterungszylinder (2) mit einem drehbaren Schläger (3), eine Nachbutterungstrommel (5) mit einer Haube (6), mindestens eine Abpresserstufe mit einem Abpresser (8) sowie wenigstens ein Schauglas mit einer Sichtscheibe aufweist, zeichnet sich dadurch aus, dass die Sichtscheibe eine Heizeinrichtung aufweist.

## Beschreibung

Die Erfindung beschreibt eine Vorrichtung zum Herstellen von Butter nach dem Oberbegriff des Anspruchs 1.

Im Bereich der industriellen Butterungsverfahren hat sich die kontinuierliche Butterung mit einer Maschine bzw. Vorrichtung zum Herstellen von Butter nach Dr. Fritz aus dem Jahr 1941 durchgesetzt. Durch diese Maschine und das entsprechende Verfahren wird eine gute und gleichmäßige Qualität der Butter bei geringen Fettverlusten sichergestellt.

Aufgrund des Fritz/Eisenreich - Verfahrens konnten die Arbeitsschritte der Schlagsahnebildung, der anschließenden Butterkornbildung, des Abtrennens von Buttermilch und des Knetens der Butter automatisiert werden. Dabei wurden die Prozesse der Butterkornbildung von Butterungstrommeln und des Knetens des erhaltenen Butterzwischenproduktes von Abpressern mit motorischen Schneckenantrieben gewährleistet.

Eine beispielhafte gattungsgemäße Vorrichtung ist in der DE 10 2009 044 429 A1 beschrieben.

Zur visuellen Kontrolle des Verfahrensablaufs weisen solche Vorrichtungen Schaugläser im Bereich einer Nachbutterungstrommel und/oder im Bereich einer Vakuumiereinrichtung in einem Abpresser auf. Auf Grund der visuellen Kontrolle des Verfahrensablaufs werden Verfahrensparameter der Butterherstellung, wie z.B. die Drehzahl eines sogenannten Schlägers oder Einstellungen am Abpresser während des Verfahrensablaufs je nach Bedarf verändert.

Derartige Verfahren und Vorrichtungen haben sich in der Praxis gut bewährt. Jedoch kommt es bei solchen Vorrichtungen zu Beeinträchtigungen der Beobachtbarkeit des Verfahrensablaufs durch Butterablagerung an den Schaugläsern.

Durch die Butterablagerungen auf den Schaugläsern ist eine visuelle Kontrolle des Verfahrensablaufs der Butterherstellung nur sehr eingeschränkt oder gar nicht mehr möglich.

Die Erfindung setzt daher bei der Aufgabe an, die Beobachtbarkeit der Butterherstellung mit den gattungsgemäßen Vorrichtungen zu verbessern.

Die Erfindung löst die Aufgabe durch eine Vorrichtung mit den Merkmalen des Anspruchs 1. Durch die Heizeinrichtung ist es vorteilhaft möglich, dass an der Sichtscheibe des Schauglases anhaftenden Butterablagerungen aufgeschmolzen werden, so dass sie von dem Schauglas abtropfen können. Dadurch wird Beobachtbarkeit des Butterungsprozesses verbessert.

In einer bevorzugten Ausführungsform der Erfindung beruht die Heizeinrichtung auf einem elektrischen Wirkprinzip. Dadurch kann die Heizeinrichtung einfach und vorteilhaft in die Sichtscheibe des jeweiligen Schauglases integriert werden.

In einer weiteren bevorzugten Ausführungsform ist wenigstens die Sichtscheibe des beheizbaren Schauglases ergänzend zur Reinigung mit einem Fluid beaufschlagbar. Dadurch können durch das Heizelement aufgeschmolzene Butterablagerungen auf der Sichtscheibe vorteilhaft zusätzlich von der Sichtscheibe gespült werden. Dadurch lassen sich auch zusätzlich zu den Butterablagerungen entstehenden Filme durch Butterzusatzstoffe, wie z.B. zusätzliche Geschmacksstoffe, Wasser oder Molke, Säurekonzentrate und Salzlake auf der Sichtscheibe vorteilhaft zuverlässig automatisch abreinigen.

Vorteilhafterweise wird als Fluid Dampf verwendet, wobei das anfallende Kondensat durch Einrichtungen an den Schaugläsern auffangbar oder mit einer Pumpe absaugbar ist und so wieder ganz oder teilweise aus dem Butterungsprozess herausbringbar ist.

In einer weiteren Ausführungsform der Erfindung wird das Fluid durch einen oder mehrere düsenartige Durchlässe auf die Sichtscheibe wenigstens eines Schauglas geleitet. Dadurch ist eine einfache und wirksame und damit vorteilhafte Aufbringung des Fluids auf die Sichtscheibe gegeben.

Vorteilhaft ist, wenn ein Zwischenelement den einen oder die mehreren düsenartigen Durchlässe aufweist. Dadurch kann das Fluid gezielt und damit vorteilhaft auf die Sichtscheibe des Schauglases geleitet werden.

In einer weiteren Ausführungsvariante der Erfindung ist der eine oder sind die mehreren düsenartigen Durchlässe bevorzugt unter einem Winkel β von 10 bis 20°, besonders bevorzugt 15° senkrecht zu einer Achse einer Öffnung des Zwischenelementes angeordnet. Durch die vorteilhafte Winkellage der düsenartigen Durchlässe ist eine sichere und damit vorteilhafte Abreinigung der Sichtscheibe des Schauglases realisierbar.

Nach einer weiteren Ausführungsform der Erfindung sind die mehreren düsenartigen Durchlässe in einer parallelen Ebene senkrecht zur Achse der Öffnung angeordnet, und zwar bevorzugt unter einem Winkel α von 20 bis 60°, besonders bevorzugt von 30° zueinander (fächerartig) angeordnet. Dadurch wird vorteilhaft sichergestellt, dass die Sichtscheibe besonders gut abgereinigt wird.

Weitere vorteilhafte Ausgestaltungen der Erfindung sind den übrigen Unteransprüchen zu entnehmen.

Ein Ausführungsbeispiel der Erfindung wird anhand der beigefügten Zeichnungen naher erläutert. In der Zeichnung zeigen:
- Fig. 1:: eine schematische Darstellung einer erfindungsgemäßen Vorrichtung zum Herstellen von Butter;
- Fig. 2:: ein Ausschnitt der Vorrichtung nach Fig. 1 im Bereich eines Schauglases an einer Vakuumkammer eines Abpressers der Vorrichtung,
- Fig. 3:: eine Vorderansicht eines Schauglases;
- Fig. 4:: eine Schnittansicht des Schauglases nach Fig. 3;
- Fig. 5:: eine weitere Schnittansicht des Schauglases nach Fig. 3.

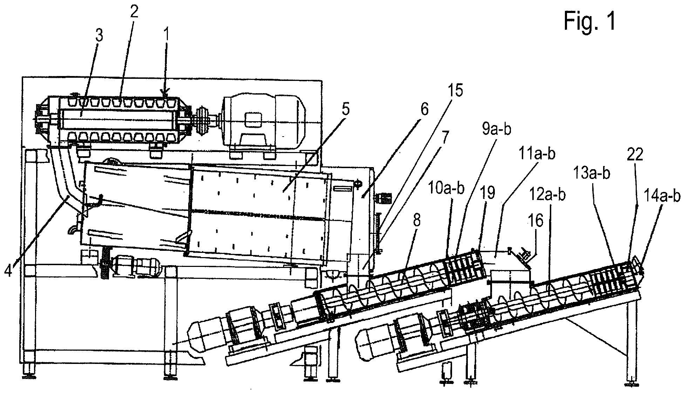

Fig. 1 zeigt eine Vorrichtung zum Herstellen von Butter, im Folgenden Butterungsmaschine genannt, die einen Einlauf 1 für Rahm aufweist, sowie einen Butterungszylinder 2 mit einem drehbar angetriebenen Schläger 3 für die Bildung von Butterkorn und Buttermilch aus zugeführtem Rahm.

In einer Kühlsektion 4 erhält das Butterkorn eine härtere Konsistenz und lässt sich anschließend besser bearbeiten.

In einer Nachbutterungstrommel 5 wird im Nachbutterungsprozess die optimale Butterkorngröße eingestellt.

Das Butterkorn wird anschließend über eine Haube 6 mit einem Zuführschacht 7 in eine erste Abpresserstufe mit einem Abpresser 8 überführt.

Der Abpresser 8 wandelt das Butterkorn in eine homogene "Wasser in Öl Emulsion" um und befreit gleichzeitig das entstandene Butterzwischenprodukt von Buttermilchresten, welche anschließend abgeführt werden.

Im Abpresser 8 sind hier beispielhaft zwei Mischsektionen 9a und 9b angeordnet, in welchen jeweils eine Teilmasse des Butterzwischenproduktes getrennt bearbeitet werden kann. Somit können verschiedene Butterqualitäten des Endproduktes in kontinuierlicher Herstellung erreicht werden.

Die Mischsektionen 9a oder 9b weisen dabei zumindest je einen Dosieranschluss 10a oder 10b auf, um zusätzliche Geschmacksstoffe, Wasser oder Molke, Säurekonzentrate und Salzlake zu dem Butterzwischenprodukt in vorbestimmter Menge zuzufügen.

Das Butterzwischenprodukt gelangt im Anschluss von jeweils einer Mischsektion 9a oder 9b über eine Vakuumkammer 11a oder 11b hier in eine zweite Abpresserstufe, bestehend aus zwei Abpressern 12a, 12b. Die zwei Abpresser der zweiten Stufe sind räumlich getrennt, wobei je ein Abpresser 12a oder 12b eine Teilmasse des Butterzwischenproduktes je einer Mischsektion 9a oder 9b bearbeitet.

In der jeweiligen Vakuumkammer 11a, 11b der ersten Abpresserstufe wird der jeweiligen Teilmasse des Butterzwischenproduktes Luft entzogen, um deren Haltbarkeit zu erhöhen und um eine Schichtenbildung durch Lufteinschluss zu verhindern. Die Vakuumkammern 11a, 11b weisen jeweils ein zweites Schauglas 16 auf, durch das der Prozess in der Vakuumkammer beobachtbar ist.

Die Abpresser 12a, 12b der zweiten Abpresserstufe sorgen zusammen mit den sich daran anschließende Mischzonen 13a, 13b für eine gleichmäßige Verteilung des Wassergehaltes und eine Optimierung des Wassergehaltes in den beiden Teilmassen des Butterzwischenproduktes.

Die Butterendprodukte verlassen die Butterungsmaschine hier über Ausläufe, welche in der vorliegenden Zeichnung durch zwei Mundstücke 14a und 14b und eine Austragspumpe 22 dargestellt sind.

Wie aus dem Fig. 1 hervorgeht, weist die Haube 6 ein erstes Schauglas 15 auf, durch das der Nachbutterungsprozeß in der Nachbutterungstrommel 5 beobachtbar ist.

Das erste Schauglas 15 weist eine Einrichtung auf, mit der eine Sichtscheibe des ersten Schauglases 15 beheizbar ist (letzteres hier nicht dargestellt). Bei der Heizeinrichtung handelt es sich z.B. um in die Sichtscheibe des ersten Schauglases eingebrachte Heizleiter aus einem Werkstoff mit einem geeigneten elektrischen Widerstand, so dass die Sichtscheibe durch die Heizleiter elektrisch beheizbar ist. Alternativ sind auch Heizeinrichtungen denkbar, die mit einem anderen Wirkprinzip arbeiten.

Durch die Heizeinrichtung ist es vorteilhaft möglich, dass sich durch die Produktion in der Buttermaschine an dem ersten Schauglas 15 bildende Butterablagerungen automatisch entfernbar sind bzw. das erste Schauglas 15 abreinigbar ist. Dazu wird die Heizeinrichtung der Sichtscheibe des ersten Schauglases 15 eingeschaltet. Infolge der Wärmeentwicklung werden die an der Sichtscheibe des ersten Schauglases 15 anhaftenden Butterablagerungen aufgeschmolzen, so dass die Butterablagerungen von der Sichtscheibe des ersten Schauglases 15 in den laufenden Butterungsprozess abtropfen können. Dadurch wird vorteilhaft die einschränkungsfreie Beobachtung des Nachbutterungsprozess in der Nachbutterungstrommel 5 ermöglicht.

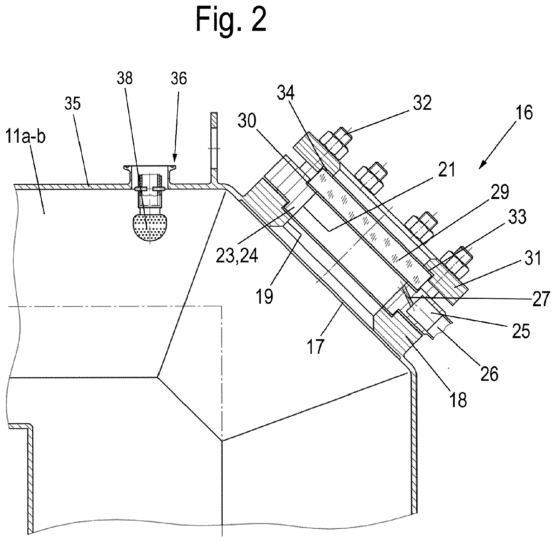

In Fig. 2 ist ein Ausschnitt der Butterungsmaschine nach Fig. 1 im Bereich eines zweiten Schauglases 16 an der Vakuumkammer 11a bzw. 11b der Fig. 1 dargestellt.

Im Folgenden wird das zweite Schauglas 16 beschrieben. Der Aufbau des ersten Schauglases 15 kann analog oder identisch zum Aufbau des zweiten Schauglases 16 gestaltet sein.

Die jeweilige Vakuumkammer 11a, 11b weist jeweils eine Öffnung 17 auf. Kongruent zu der Öffnung 17 weist die Vakuumkammer 11a, 11b jeweils einen Flansch 18 auf, der an der Vakuumkammer 11a, b befestigt ist.

Der Flansch 18 weist ebenfalls eine Öffnung 19 auf, die konturkongruent zur Öffnung 17 gestaltet ist und deshalb korrespondierend zur Öffnung 17 angeordnet ist. Auf dem Flansch 18 ist ein Zwischenelement 20 angeordnet, das ebenfalls eine Öffnung 21 aufweist. Auch diese Öffnung 21 ist konturkongruent zur Öffnung 17 gestaltet und ist deshalb korrespondierend zur Öffnung 17 angeordnet.

Es ergibt sich dadurch also eine durchgehende Öffnung mit hier gleichbleibendem Querschnitt, welche die Vakuumkammer 11a, bzw. 11b, den Flansch 18 und das Zwischenelement 20 durchgreift und die jeweils die Teilöffnungen 17, 19, 21 aufweist.

Das Zwischenelement 20 weist einen Zentrieransatz 23 auf, der in eine geometrisch korrespondierende Vertiefung 24 des Flansches 18 eingreift. Zwischen dem Zentrieransatz 23 und der Vertiefung 24 ist eine Dichtung angeordnet, die die Öffnungen 19, 21 gegen die Umgebung hin abdichtet.

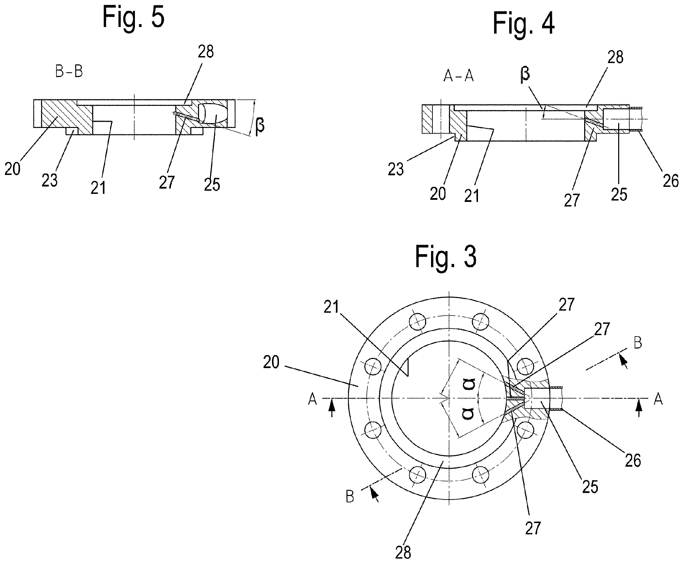

Das Zwischenelement 20 des zweiten Schauglases 16 weist einen Anschluss 25 für eine Leitung oder einen Schlauch 26 auf. Ferner weist das Zwischenelement 20 des zweiten Schauglases 16 wenigstens einen 27 oder mehrere düsenartigen Durchlässe 27 auf, der den Anschluss 25 mit der Öffnung 21 verbindet. Die Öffnungen 21 der hier drei Durchlässe 27 (siehe Fig. 3) sind zur vakuumkammerabgewandten Seite des Zwischenelements 20 gerichtet. Durch den Anschluss 25 und die düsenartigen Durchlässe 27 kann ein Fluid - z.B. Dampf - durch das Zwischenelement 20 in die Öffnung 21 geleitet werden.

Die Vakuumkammer 11a, 11b (siehe Fig. 2) weist eine Wandung 35 auf, die mit einer Durchführung 36 versehen ist. In die Durchführung 36 ist eine Düsenanordnung 38 eingesetzt. An die Durchführung 36 kann außerhalb der Vakuumkammer 11a, 11b eine (hier nicht dargestellte) Vakuumpumpe angeschlossen werden, mit welcher Luft und ggf. Dampf aus der Vakuumkammer 11a, 11b abgesaugt werden können.

Die Düsenanordnung 38 ist nach Art einer Mehrfachdüse ("sprayballartig") ausgestaltet, die mehrere feine Eintrittsöffnungen mit einem kleinen Durchmesser innerhalb der Vakuumkammer 11a, 11b aufweist, die in einen gemeinsamen Kanal größeren Durchmessers münden, der die Wandung 35 durchsetzt.

In Fig. 3 und Fig. 4 ist jeweils das Zwischenelement 20 mit den düsenartigen Durchlässen 27 dargestellt. Die hier drei düsenartigen Durchlässe 27 sind bevorzugt unter einem Winkel β von 10 bis 20°, besonders bevorzugt 15° senkrecht zur Achse der Öffnung 21 angeordnet. Die drei Durchlässe sind in einer parallelen Ebene senkrecht zur Achse der Öffnung 21 bevorzugt unter einem Winkel α von 20 bis 60°, besonders bevorzugt von 30° zueinander fächerartig angeordnet. Die düsenartigen Durchlässe 27 weisen einen Durchmesser bevorzugt zwischen 1 und 5 mm, besonders bevorzugt von 1,5 mm auf.

Das Zwischenelement 20 des ersten Schauglases 15 kann optional ebenfalls einen Anschluss 25 und einen oder mehreren düsenartige(n) Durchlässe 27 aufweisen, mit dem bzw. denen die Sichtscheibe 29 des ersten Schauglases 15 mit einem Fluid beaufschlagbar ist. Dies ist vorteilhaft, jedoch nicht zwingend.

Das Zwischenelement 20 weist eine Vertiefung 28 auf, in die die Sichtscheibe 29 eingelegt ist. Zwischen der Sichtscheibe 29 und dem Zwischenelement 20 ist eine Dichtung 30 angeordnet, die die Öffnung 21 gegen die Umgebung hin abdichtet.

Die Sichtscheibe 29 und damit das zweite Schauglas 16 weist eine Einrichtung auf, mit der die Sichtscheibe 29 beheizbar ist (hier nicht dargestellt). Bei der Heizeinrichtung handelt es sich wiederum vorzugsweise um in die Sichtscheibe 29 eingebrachte Heizleiter aus einem Werkstoff mit einem geeigneten elektrischen Widerstand, so dass die Sichtscheibe 29 des zweiten Schauglases 16 durch die Heizleiter elektrisch beheizbar ist. Alternativ sind auch Heizeinrichtungen denkbar, die mit einem anderen Wirkprinzip arbeiten. Durch die Heizeinrichtung ist es wiederum vorteilhaft möglich, sich während der Butterherstellung in der Buttermaschine an der Sichtscheibe 29 des zweiten Schauglases 16 bildende Butterablagerungen automatisch zu entfernen bzw. zu reinigen. Dazu werden wiederum mit der Heizeinrichtung die an der Sichtscheibe 29 des zweiten Schauglases 16 anhaftenden Butterablagerungen aufgeschmolzen, so dass die Butterablagerungen von der Sichtscheibe 29 des zweiten Schauglases 16 abtropfen können. Vorzugsweise beträgt die beim Beheizen am Schauglas - hier 16 - erreichbare Temperatur 40 bis 90°C, bevorzugt 60°C. Eine Temperatur über 90°C erscheint weniger vorteilhaft, da ein Verdampfen des Wassers in der Butter nicht erwünscht ist.

Die Sichtscheibe 29 des zweiten Schauglases 16 wird mit einer Schauglasbrille 31 mittels mehrerer Schrauben 32 auf das Zwischenelement 20 geschraubt und gepresst. Die Schauglasbrille 31 weist dazu eine Vertiefung 33 auf, in die die Sichtscheibe 29 eingreift. Zwischen der Sichtscheibe 29 und der Schauglasbrille 31 ist eine Dichtung 34 angeordnet, die die Sichtscheibe 29 gegen die Umgebung hin abdichtet.

Durch die düsenartigen Durchlässe 27 ist die Sichtscheibe 29 des zweiten Schauglases 16 zusätzlich mit einem Fluid, wie z.B. Dampf beaufschlagbar. Dadurch können durch das Heizelement aufgeschmolzene Butterablagerungen auf der Sichtscheibe 29 vorteilhaft zusätzlich von der Sichtscheibe 29 gespült werden.

Dadurch lassen sich auch zusätzlich zu den Butterablagerungen entstehenden Filme durch Butterzusatzstoffe, wie z.B. zusätzliche Geschmacksstoffe, Wasser oder Molke, Säurekonzentrate und Salzlake auf der Sichtscheibe 29 des zweiten Schauglases 16 vorteilhaft zuverlässig automatisch abreinigen.

Durch die Beheizbarkeit der Sichtscheibe 29 des zweiten Schauglases 16 mit dem Heizelement und die zusätzliche Möglichkeit zur Entfernbarkeit von hartnäckigen Filmen aus Butterzusatzstoffen auf der Sichtscheibe 29 des zweiten Schauglases 16 durch Beaufschlagung der Sichtscheibe 29 mit einem Fluid, wie z.B. Dampf wird vorteilhaft die einschränkungsfreie Beobachtung des Herstellens der Butter optimiert.

### Bezugszeichen

- Einlauf: 1
- Butterungszylinder: 2
- Schläger: 3
- Kühlsektion: 4
- Nachbutterungstrommel: 5
- Haube: 6
- Zuführschacht: 7
- Abpresser: 8
- Mischsektion: 9a, 9b
- Dosieranschluss: 10a, 10b
- Vakuumkammer: 11a, 11b
- Abpresser: 12a, 12b
- Mischzone: 13a, 13b
- Mundstück: 14a, 14b
- Schauglas: 15
- Schauglas: 16
- Öffnung: 17
- Flansch: 18
- Öffnung: 19
- Zwischenelement: 20
- Öffnung: 21
- Austragspumpe: 22
- Zentrieransatz: 23
- Vertiefung: 24
- Anschluss: 25
- Schlauch: 26
- Durchlass: 27
- Vertiefung: 28
- Sichtscheibe: 29
- Dichtung: 30
- Schauglasbrille: 31
- Schraube: 32
- Vertiefung: 33
- Dichtung: 34
- Wandung: 35
- Durchführung: 36
- Düsenanordnung: 38

## Patentansprüche

1. Vorrichtung zum Herstellen von Butter, die zumindest Folgendes aufweist:
a. einen Einlauf (1),
b. einen Butterungszylinder (2) mit einem drehbaren Schläger (3),
c. eine Nachbutterungstrommel (5) mit einer Haube (6),
d. eine Abpresserstufe (8), und
e. wenigstens ein Schauglas (15) mit einer Sichtscheibe (29),
**dadurch gekennzeichnet, dass**
f. die Sichtscheibe (29) eine Heizeinrichtung aufweist.

2. Vorrichtung nach Anspruch 1, **dadurch gekennzeichnet, dass** die Haube (6) der Nachbutterungstrommel (5) die Sichtscheibe oder eine der Sichtscheiben mit der Heizeinrichtung aufweist.

3. Vorrichtung nach Anspruch 1 oder 2, , **dadurch gekennzeichnet, dass** die Abpresserstufe die Sichtscheibe (29) oder eine der Sichtscheiben mit der Heizeinrichtung aufweist.

4. Vorrichtung nach einem der vorstehenden Ansprüche, **dadurch gekennzeichnet, dass** die Heizeinrichtung der Sichtscheibe (29) eine elektrisch wirkende Heizung ist, und/oder dass die Heizeinrichtung der Sichtscheibe (29) einen oder mehrere Heizleiter aufweist.

5. Vorrichtung nach einem der vorstehenden Ansprüche, **dadurch gekennzeichnet, dass** die Heizeinrichtung zum Erwärmen der Sichtscheibe auf eine Temperatur ausgelegt ist, die Butter aus Kuhmilch zum Schmelzen bringt.

6. Vorrichtung nach einem der vorgenannten Ansprüche, **dadurch gekennzeichnet, dass** die Sichtscheibe (29) oder eine der Sichtscheiben (29) mit der Heizeinrichtung ergänzend mit einem Fluid beaufschlagbar ist, welches vorzugsweise Dampf ist.

7. Vorrichtung nach Anspruch 6 oder 7, **dadurch gekennzeichnet, dass** das Fluid durch einen oder mehrere düsenartige Durchlässe (27) auf die Sichtscheibe (29) wenigstens eines Schauglas (15, 16) leitbar ist.

8. Vorrichtung nach Anspruch 7, **dadurch gekennzeichnet, dass** ein Zwischenelement (20) den einen oder die mehreren düsenartigen Durchlässe (27) aufweist.

9. Vorrichtung nach einem der vorgenannten Ansprüche 7 oder 8, **dadurch gekennzeichnet, dass** die Sichtscheibe (29) in eine Vertiefung (24) des Zwischenelements (20) eingesetzt ist.

10. Vorrichtung nach Anspruch 9, **dadurch gekennzeichnet, dass** das Zwischenelement (20) auf einem Flansch (17) angeordnet ist, wobei der Flansch (17) auf einer Vakuumkammer (11 a, 11 b) oder der Haube (6) angeordnet ist.

11. Vorrichtung nach einem der vorgenannten Ansprüche, **dadurch gekennzeichnet, dass** die Sichtscheibe (29) in eine Vertiefung (33) einer Schauglasbrille (31) eingreift.

12. Vorrichtung nach einem der vorgenannten Ansprüche, **dadurch gekennzeichnet, dass** die Sichtscheibe (29) über die Schauglasbrille (31) sowie Schrauben (32) an dem Zwischenelement (20) befestigt ist.

13. Vorrichtung nach einem der vorgenannten Ansprüche, **dadurch gekennzeichnet, dass** der eine oder die mehreren düsenartigen Durchlässe (27) bevorzugt unter einem Winkel β von 10 bis 20°, besonders bevorzugt 15° senkrecht zu einer Achse einer Öffnung (21) des Zwischenelementes (20) angeordnet ist / sind.

14. Vorrichtung nach einem der vorgenannten Ansprüche, **dadurch gekennzeichnet, dass** die mehreren düsenartigen Durchlässe (27) in einer parallelen Ebene senkrecht zur Achse der Öffnung 21 bevorzugt unter einem Winkel α von 20 bis 60°, besonders bevorzugt von 30° zueinander fächerartig angeordnet sind.

15. Vorrichtung nach einem der vorgenannten Ansprüche, **dadurch gekennzeichnet, dass** der eine oder die mehreren düsenartigen Durchlässe (27) einen Durchmesser bevorzugt zwischen 1 und 5 mm, besonders bevorzugt von 1,5 mm aufweist bzw. aufweisen.
